# EUROPEAN PATENT SPECIFICATION

(11) **EP 4 434 889 B1**
(45) Date of publication and mention of the grant of the patent: **10.12.2025**
(21) Application number: 23203724.2
(22) Date of filing: 16.10.2023
(51) Int. Cl.: B64D 13/06

(54) **APPARATUS FOR CONTROLLING TEMPERATURE AND PRESSURE OF AIRCRAFT**
VORRICHTUNG ZUR REGELUNG VON TEMPERATUR UND DRUCK EINES FLUGZEUGS
APPAREIL DE RÉGULATION DE TEMPÉRATURE ET DE PRESSION D'AÉRONEF

(30) Priority: 20.03.2023 KR 20230035869
(43) Date of publication of application: 25.09.2024
(73) Proprietor: HYUNDAI MOTOR COMPANY, Seoul 06797 (KR); Kia Corporation, Seocho-gu Seoul 06797 (KR)
(72) Inventor: KIM, Gwi Taek, Seoul (KR); HWANG, Ji Won, Seoul (KR); KIM, Mi Jin, Seoul (KR); JUNG, Woo Suk, Seoul (KR)
(74) Representative: Viering, Jentschura & Partner mbB Patent- und Rechtsanwälte

(56) References cited:
- WO-A1-99/32357
- FR-A1- 2 829 466
- US-A1- 2016 083 100
- US-A1- 2017 170 494
- US-A1- 2018 281 976
- US-A1- 2022 033 087
- US-A1- 2023 069 975

## Description

### TECHNICAL FIELD

The present disclosure relates to an apparatus for controlling temperature and pressure of an aircraft that can provide heated compressed air or cooling air to a fuel cell power train while controlling the in-flight temperature, pressure, humidity, and the like, of the aircraft, for example, in an electric propulsion aircraft.

### BACKGROUND

In general, an aircraft may be equipped with an apparatus for controlling temperature and pressure. The apparatus for controlling temperature and pressure may extract high-temperature and high-pressure compressed air from an engine, and the extracted compressed air may be supplied to a cabin or a cockpit after adjusting the temperature and pressure in an air conditioner.

The apparatus for controlling temperature and pressure may serve to control pressure of an interior, supply sufficient air for people (e.g., passengers) to feel comfortable in the interior, and control humidity, heating and cooling in the interior.

An air cycle machine, including one or more heat exchangers, a compressor, and one or more turbines, is known as an air conditioner. The air cycle machine may be configured to obtain bleed air from an engine.

Furthermore, as the electrification of the aircraft progresses in stages, a method of coupling a motor to an air cycle machine and supplying electricity generated by an engine to operate the air cycle machine may be used. In some implementations, the air cycle machine may also be linked to the engine in terms of energy supply.

Furthermore, an electric propulsion aircraft using fuel cells as a power source is being researched and developed. However, in this case, because a motor and an inverter are replaced with the engine, a new apparatus for controlling temperature and pressure is required to control in-flight temperature, pressure and humidity, without the engine. Additionally, an additional means for thermal management of a fuel cell power train is required.

Descriptions in this background section are provided to enhance understanding of the background of the disclosure, and may include descriptions other than those of the prior art already known to those of ordinary skill in the art to which this technology belongs.

An apparatus for an aircraft according to the preamble of claim 1 is, e.g., known from FR 2 829 466 A1.

US 2016 / 083 100 A1 discloses an aircraft air conditioning system comprising an ambient air supply line having a first end connected to an ambient air inlet and a second end connected to a mixer of the aircraft air conditioning system so as to supply ambient air to the mixer. A first compressor is arranged in the ambient air supply line and is adapted to compress the ambient air flowing through the ambient air supply line. A bleed air supply line allows a flow of bleed air bled off from an engine or an auxiliary power unit therethrough. A bleed air turbine is driven by the bleed air flowing through the bleed air supply line and is coupled to the first compressor so as to drive the first compressor.

### SUMMARY

The invention provides an apparatus for an aircraft according to claim 1. Further embodiments are described in the dependent claims.

Accordingly, the invention provides an apparatus for controlling temperature and pressure of an aircraft that can provide heated compressed air or cooling air to a fuel cell power train, as well as controlling in-flight temperature, pressure and humidity of the aircraft, for example, in an electric propulsion aircraft.

### BRIEF DESCRIPTION OF DRAWINGS

The above and other aspects, features, and advantages of the present disclosure will be more clearly understood from the following detailed description, taken in conjunction with the accompanying drawings, in which:
FIG. 1 is a block diagram illustrating an apparatus for controlling temperature and pressure of an aircraft;
FIG. 2 is a diagram illustrating a case in which an apparatus for controlling temperature and pressure of an aircraft operates in a first mode;
FIG. 3 is a diagram illustrating a case in which an apparatus for controlling temperature and pressure of an aircraft operates in a second mode;
FIG. 4 is a diagram illustrating a case in which an apparatus for controlling temperature and pressure of an aircraft operates in a third mode;
FIG. 5 is a diagram illustrating a case in which an apparatus for controlling temperature and pressure of an aircraft operates in a fourth mode;
FIG. 6 is a diagram illustrating a case in which an apparatus for controlling temperature and pressure of an aircraft operates in a fifth mode;
FIG. 7 is a diagram illustrating a case in which an apparatus for controlling temperature and pressure of an aircraft operates in a sixth mode;
FIG. 8 is a diagram illustrating a case in which an apparatus for controlling temperature and pressure of an aircraft operates in a seventh mode; and
FIG. 9 is a diagram illustrating a case in which an apparatus for controlling temperature and pressure of an aircraft operates in an eighth mode.

### DETAILED DESCRIPTION

Hereinafter, the present disclosure will be described in detail with reference to the accompanying drawings. In adding reference numerals to elements of each of the drawings, although the same elements are illustrated in other drawings, like reference numerals may refer to like elements.

The terms such as "first," "second" or "third" may be used to describe various elements, but these elements are not limited in order, size, position, and importance by terms such as "first," "second," and "third," and may be used for distinguishing one component from other components.

In the present specification, an aircraft may refer to a mobility vehicle configured to fly and move over the air. The aircraft may refer to a rotorcraft, a drone, a tilt rotor aircraft, a vertical take-off and landing aircraft, a fixed-wing aircraft, or the like, and may also include a vehicle that may taxi on the ground using wheels and fly with the wheels separated from the ground. The aircraft may include a manned aircraft and an unmanned aircraft. The manned aircraft may include a fuselage that can operate by autonomous flight in addition to a fuselage controlled by a pilot.

In the present specification, a fuel cell power train may refer to all components configured to generate electrical energy through an electrochemical reaction in an aircraft, transmit the generated electrical energy, and convert the transmitted electrical energy into mechanical energy to provide driving power of the aircraft. The fuel cell power train may include components related to driving power of, for example, a motor, an inverter, and a decelerator, from the fuel cell stack.

Although the present disclosure is described and illustrated based on an example in which an apparatus for controlling temperature and pressure is applied to an electric propulsion aircraft using a fuel cell as a power source for convenience of description, aspects of the present disclosure are not limited thereto. For example, compressed air and cooling air flowing in the apparatus for controlling temperature and pressure may be supplied to other uses in the aircraft.

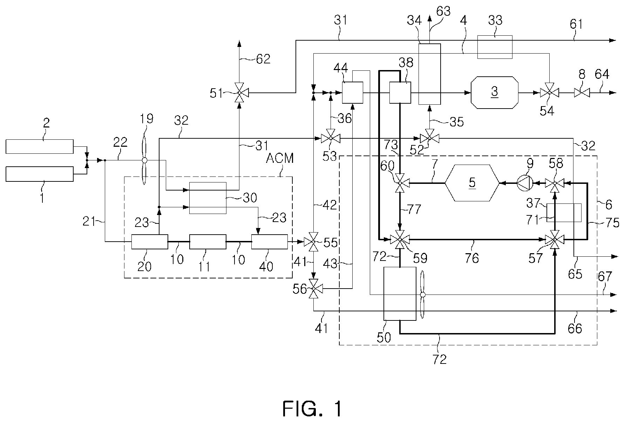

FIG. 1 is a block diagram illustrating an apparatus for controlling temperature and pressure of an aircraft.

As illustrated in FIG. 1, an apparatus for controlling temperature and pressure of an aircraft may include a shaft 10, a compressor 20, a heat exchanger 30, a turbine 40, and a cooling heat exchanger 50.

The apparatus for controlling temperature and pressure illustrated in FIG. 1 may connect air scoops 1 and 2 to an interior 3 such as a cabin or a cockpit in an aircraft, and may connect the air scoops to a heat management system 6 of a fuel cell power train 5. The apparatus for controlling temperature and pressure may be configured based on an air cycle machine (ACM).

The air cycle machine (ACM) may be configured by connecting the compressor 20 and the turbine 40 with a shaft 10, and by disposing the heat exchanger 30 on a bootstrap line 23 for communicating an outlet of the compressor with an inlet of the turbine. A plurality of compressors and a plurality of turbines may be provided, respectively, so that a multistage compressor and a multistage turbine may be configured.

In the air cycle machine (ACM), a motor 11 driven by power from an inverter (not illustrated) may be connected to the shaft 10 or coupled onto the shaft 10. Due to the driving of the motor, external air having low pressure may also be used.

After the external air is introduced into the apparatus for controlling temperature and pressure of the present disclosure, the external air may be distributed to a cabin, a cockpit, or other internal volume in the aircraft through each line composed of ducts or pipes. The external air may control a temperature, pressure, humidity, and the like, inside the aircraft and may ventilate an interior thereof to create a pleasant internal environment. The external air may be discharged from the aircraft and/or may be returned to the aircraft and circulated.

For example, external air line 21 introducing external air into an inlet of the compressor 20, a cooling line 41 supplying cooling air from an outlet of the turbine 40 to a heat management system 6 of the fuel cell power train 5, a first cooling line supplying the cooling air from the outlet of the turbine to the interior 3, a first heating line 31 supplying an high-temperature external air flowing from the heat exchanger 30 to the interior, a heating line 32 supplying heated compressed air flowing from an outlet of the compressor 20 to the interior or a heat management system may be connected to the air cycle machine (ACM).

The heat exchanger 30 may heat-exchange external air adiabatically compressed by the compressor 20 (i.e., compressed air) with a portion of external air directly introduced from air scoops 1 and 2 bypassing the compressor, thereby enabling a portion of the external air to obtain heat from the compressed air heated in the compressor 20 and cooling the compressed air.

The compressed air passes through the heat exchanger 30 and flows into the inlet of the turbine 40, and the compressed air may be further cooled while being adiabatically expanded in the turbine to form cooling air. The cooling air may be output from the turbine to the cooling line 41 and/or a first cooling line 42.

Accordingly, the apparatus for controlling temperature and pressure of an aircraft may have increased efficiency and increased cooling performance using a process of heat transmission at a constant pressure, insulation compression, and insulation expansion.

A plurality of air scoops may be provided, and may include, for example, a first air scoop 1 and a second air scoop 2.

When the aircraft is on the ground or at a low altitude near the ground, the external air around the aircraft may flow into the aircraft, for example, through the first air scoop 1.

When the aircraft is cruising at a predetermined altitude or higher, the external air may be introduced into the aircraft, for example, through the second air scoop 2. The external air may be referred to as so-called "ram air." The apparatus for controlling temperature and pressure of an aircraft may utilize the ram air generated by the operation of the aircraft and introduced into the aircraft with a predetermined pressure. The ram air may be used in other systems or other components in the aircraft.

The external air line 21 may include a flow path from the air scoops 1 and 2 to the compressor 20. An introduction line 22 connecting the air scoop 1 and the heat exchanger 30 may be branched from the external air line 21.

An air intake fan 19 may be installed in the introduction line 22 to promote an introduction of the external air and provide a flow rate. If the air intake fan 19 does not operate (e.g., since there is little air flow through the introduction line), the air intake fan may act as a kind of on-off valve.

The first heating line 31 may be connected to the introduction line 22 downstream of the heat exchanger 30. The external air in the first heating line may transmit heat transmitted from compressed air passing through the heat exchanger by the bootstrap line 23 to the interior 3.

To this end, a first heating heat exchanger 33 may be disposed between the first heating line 31 and an air circulation line 4 in the interior 3, and accordingly, the heat of the first heating line may be transmitted to air circulated along the air circulation line in the interior. Accordingly, heating in the interior may be performed by recovering waste heat of the first heating line and providing the waste heat to the interior.

A first exhaust line 61 may be connected to the first heating line 31 downstream of the first heating heat exchanger 33. The first exhaust line may exhaust a heat-exchanged external air out of the aircraft by an exhaust hole (not illustrated).

The first heating line 31 may be connected to a second exhaust line 62 upstream of the first heating heat exchanger 33. The second exhaust line may exhaust the heat-exchanged external air out of the aircraft by the exhaust hole.

To this end, a first valve 51 may be installed between the first heating line 31 and the second exhaust line 62. In an example, a three-way valve may be adopted as the first valve.

By the first valve 51, the first heating line 31 may selectively supply the heat to the first heating heat exchanger 33, thereby adjusting a temperature of the interior 3 as well as providing or stopping the heating.

The heating line 32 connecting the compressor 20 and the heat management system 6 of the fuel cell power train 5 may be branched from the bootstrap line 23. The heating line may supply heated compressed air flowing from the outlet of the compressor to the air circulation line in the interior 3 and/or a refrigerant circulation line 7 constituting the heat management system 6.

For example, a second heating line 35 may be connected to the heating line 32, and a second heating heat exchanger 34 may be disposed between the second heating line 35 and the air circulation line 4 in the interior 3, so that the heat of the heated compressed air flowing through the heating line may be selectively transmitted to circulating air of the interior. Accordingly, heating in the interior may be performed by providing the heat to the interior.

A second valve 52 may be installed between the heating line 32 and the second heating line 35. In an example, a three-way valve may be adopted as the second valve.

The second heating line 35 may be connected to a third exhaust line 63 downstream of the second heating heat exchanger 34. The third exhaust line 63 may exhaust the heat-exchanged compressed air out of the aircraft by the exhaust hole.

Because a third heating line 36 is connected between the heating line 32 and the air circulation line 4, the heated compressed air may be supplied to the interior 3 with a predetermined pressure.

A third valve 53 may be installed between the heating line 32 and the third heating line 36. In an example, a three-way valve may be adopted as the third valve.

By the third valve 53, the third heating line 36 may selectively and directly supply the heated compressed air to the air circulation line 4, thereby providing or stopping heating and pressurization as well as controlling the temperature and pressure in the interior 3.

The air circulation line 4 may be connected to a fourth exhaust line 64 upstream of the first heating heat exchanger 33. The fourth exhaust line 64 may selectively exhaust air of the interior out of the aircraft by the exhaust hole.

To this end, a fourth valve 54 may be installed between the air circulation line 4 and the fourth exhaust line 64. In an example, a three-way valve may be adopted as the fourth valve 54. A pressure control valve 8 for adjusting air pressure of the interior may be mounted in the fourth exhaust line 64.

Since the fourth valve 54 acts as a valve determining a direction of an air flow path, air circulation or exhaust may be performed according to the operation of the fourth valve 54. The pressure control valve 8 may act as a valve for determining an air flow rate, thereby maintaining an appropriate pressure required in the interior.

Because a heating heat exchanger 37 is disposed between the heating line 32 and the refrigerant circulation line 7, the heat from the heating line 32 may be transmitted to the refrigerant circulation line 7 in the heat management system 6 of the fuel cell power train 5. Among the refrigerant circulation lines, a refrigerant flow path receiving the heat by the heating heat exchanger upstream of the fuel cell power train 5 may be referred to as a refrigerant heating line 71. The refrigerant circulation line 71 may include a first bypass line 75 bypassing the heating heat exchanger.

Accordingly, the apparatus for controlling temperature and pressure of an aircraft may increase an internal temperature of the heat management system 6, and may allow the fuel cell power train 5 to be stably started and operated even in a low temperature environment (e.g., in winter) .

The heating line 32 may be connected to a fifth exhaust line 65 downstream of the heating heat exchanger 37. The fifth exhaust line 65 may exhaust the heat-exchanged compressed air out of the aircraft by the exhaust hole.

The cooling line 41 may connect the turbine 40 and the heat management system 6 of the fuel cell power train 5. The cooling air adiabatically expanded and discharged from the turbine may cool the refrigerant of the refrigerant circulation line 7 constituting the heat management system.

For example, the refrigerant circulation line 7 of the heat management system 6 may be connected to the cooling line 41 through the cooling heat exchanger 50. The refrigerant flow path between the refrigerant circulation line and the cooling heat exchanger may be referred to as a refrigerant cooling line 72. The refrigerant circulation line may include a second bypass line 76 bypassing the cooling heat exchanger.

The cooling heat exchanger 50 may include, for example, a radiator-type heat exchanger formed to allow the refrigerant circulating and cooling the fuel cell power train 5 to pass through the inside. The heat exchanger may include a cooling fan. The cooling air of the cooling line 41 may cool the refrigerant by exchanging the heat with the refrigerant inside a radiator while passing through the radiator.

The refrigerant may be a cooling water (or any other types of refrigerant). The refrigerant may be circulated along the refrigerant circulation line 7 constituting the heat management system 6. In this case, the refrigerant circulation line 7 may include a pump 9 for circulating a liquid refrigerant.

However, the shape of the cooling heat exchanger 50 and examples of refrigerants and a pumping device thereof are not necessarily limited to those described above.

Accordingly, the apparatus for controlling temperature and pressure of an aircraft may secure cooling performance for the fuel cell power train 5.

The first cooling line 42 may be connected to the cooling line 41 connected from an outlet of the turbine 40. The first cooling line 42 may supply cooling air branched and flowing from the cooling line 41 to the interior 3.

To this end, a fifth valve 55 may be installed between the first cooling line 42 and the cooling line 41. In an example, a three-way valve may be adopted as the fifth valve.

By the fifth valve 55, the first cooling line 42 may selectively and directly supply the cooling air to the air circulation line 4, thereby adjusting the temperature and pressure in the interior 3 as well as providing or stopping especially cooling, dehumidification, and pressurization.

A second cooling line 43 connecting the turbine 40 and the air circulation line 4 in the interior 3 may be branched from the cooling line 41. The second cooling line 43 may transmit the cooling air from the outlet of the turbine to the air circulation line 4 in the interior 3.

To this end, because an air-conditioning heat exchanger 44 is disposed between the second cooling line 43 and the air circulation line 4 in the interior 3, a chill of the second cooling line 43 may be transmitted to the air of the air circulation line flowing into the interior. Accordingly, cooling may be performed by supplying the chill to the interior.

The second cooling line 43 may supply the cooling air to the cooling heat exchanger 50, for example, in the form of a radiator, downstream of the air-conditioning heat exchanger 44. While the cooling air of the second cooling line 43 passes through the radiator, the cooling air may exchange heat with the refrigerant inside the radiator, thus cooling the refrigerant.

A sixth valve 56 may be installed between the second cooling line 43 and the cooling line 41. In an example, a three-way valve may be adopted as the sixth valve 56.

By the sixth valve 56, the second cooling line 43 may selectively supply the chill to the air-conditioning heat exchanger 44 and the cooling heat exchanger 50, thus performing cooling of the fuel cell power train 5 simultaneously with cooling in the interior 3.

The cooling line 41 and the second cooling line 43 may be connected to a sixth exhaust line 66 and a seventh exhaust line 67 downstream of the cooling heat exchanger 50, respectively. The sixth exhaust line 66 and the seventh exhaust line 67 may exhaust the heat-exchanged cooling air out of the aircraft by the exhaust hole.

The apparatus for controlling temperature and pressure of an aircraft may transmit the heat generated by the fuel cell power train 5 to the air circulating in the interior 3.

For example, the refrigerant circulation line 7 of the heat management system 6 may be connected to the air circulation line 4 in the interior 3 through a refrigerant-air heat exchanger 38 upstream of the cooling heat exchanger 50. A refrigerant flow path between the refrigerant circulation line and the refrigerant-air heat exchanger may be referred to as a fourth heating line 73. The refrigerant circulation line may include a third bypass line 77 bypassing the refrigerant-air heat exchanger.

The refrigerant heated in the fuel cell power train 5 may transmit the heat to the air of the air circulation line 4 flowing into the interior 3 while passing through the refrigerant-air heat exchanger 38. Accordingly, additional heating in the interior may be performed by recovering waste heat from the fuel cell power train 5 and providing heat to the interior.

If the refrigerant circulation line 7 is equipped with a plurality of bypass lines, a plurality of valves may be arranged for branching and connecting, and for selection of flow paths.

For example, a seventh valve 57 may be installed on one side of the refrigerant heating line 71, one side of the first bypass line 75, one side of the second bypass line 76 and one side of the refrigerant cooling line 72. In an example, a four-way valve may be adopted as the seventh valve 57.

An eighth valve 58 may be installed on the refrigerant circulation line 7, the other side of the refrigerant heating line 71 and the other side of the first bypass line 75. In an example, a three-way valve may be adopted as the eighth valve 58.

A ninth valve 59 may be installed on the other side of the refrigerant cooling line 72, the other side of the second bypass line 76, one side of the third bypass line 77 and one side of the fourth heating line 73. In an example, a four-way valve may be adopted as the ninth valve 59.

A tenth valve 60 may be installed on the refrigerant circulation line 7, the other side of the third bypass line 77 and the other side of the fourth heating line 73. In an example, a three-way valve may be adopted as the tenth valve 60.

As the three-way valve and the four-way valve described above, an electric valve driven by a driving motor (not illustrated) connected to a separate power source under the control of a controller (not illustrated) described below may be employed. Opening/closure or an opening degree of an internal valve body may be controlled while the internal valve body rotates at a predetermined angle, for example, based on a zero point according to driving of the driving motor, thus enabling a valve to determine a flow direction and a flow path of air. The valve may control a flow rate of air flowing to each line.

The controller may be electrically connected to an altitude sensor, an outdoor temperature sensor, an indoor temperature sensor, an outdoor pressure sensor, an indoor pressure sensor, a humidity sensor, an air flow sensor, a refrigerant temperature sensor, a stack temperature sensor, and the like of the aircraft to receive detection signals. The controller may be electrically connected to the motor 11, an inverter, valves 51 to 60 and 8, the air intake fan 19, and the pump 9, and may transmit command signals for controlling operations of components thereof.

The controller may include a plurality of electrical and electronic components that provide power and operation control to the pertinent components, respectively. For example, the controller may include a memory and a microprocessor with a semiconductor chip embedded therein, and may perform various operations or instructions. The controller may control an overall operation of the apparatus for controlling temperature and pressure.

The controller may exchange various information or signals required for an operation with the corresponding component through a communication link. As a communication link, wireless communication such as a short-range communication network may be adopted, but aspects of the present disclosure are not limited to this, and wired communication, wire and wireless communication and/or optical communication may be applied to the communication link.

For example, the controller may be merged into an upper control system of the aircraft or used in combination therewith. The controller may be linked to at least one other control system, such as an air supply control system, an indoor air conditioning and temperature control system, a machine control system, a hydraulic control system, an electrical control system, a fuel cell air supply control system, and a heat management control system.

The apparatus for controlling temperature and pressure may be operated in a plurality of modes (e.g., a total of 8 modes) by enabling the controller to operate a plurality of valves.

Hereinafter, an operating method for each mode of the apparatus for controlling temperature and pressure configured as described above will be described. In explaining the operation method, detailed descriptions related to the control of the motor 11 and the inverter, the valves 51 to 60 and 8, and the air intake fan 19 by the controller may be omitted.

Each mode is described with reference to the drawings, in which a flow path of a solid line represents a flow path through which the air or refrigerant is flowing, and in the three-way valve or the four-way valve, a flow of the air or refrigerant is displayed through an open port indicated by a blank triangle.

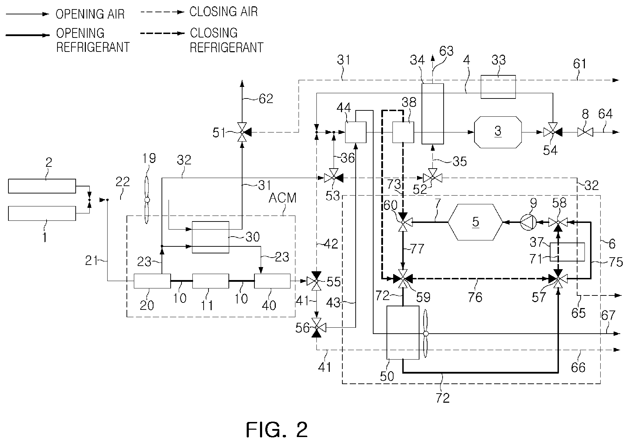

FIG. 2 is a diagram illustrating a case in which an apparatus for controlling temperature and pressure of an aircraft operates in a first mode.

In the first mode, an appropriate air pressure may be applied to the interior 3, cooling or dehumidification may be performed, and a heating element of the fuel cell power train 5, such as the fuel cell stack, may be cooled.

External air may be compressed to become heated compressed air, and a portion of the heated compressed air may be supplied to the interior 3 of the aircraft before a heat exchange operation. The remaining compressed air may be heat-exchanged with the external air and may be expanded to form cooling air, and the cooling air may flow through the interior of the aircraft and may be heat-exchanged with circulating air, thus cooling the interior. The cooling air may be supplied to the heat management system 6 of the fuel cell power train 5 and may cool the refrigerant by exchanging heat with the refrigerant. Accordingly, the heating element of the fuel cell power train, for example, the fuel cell stack, may be cooled.

The external air around the aircraft may be introduced into the aircraft through the air scoops 1 and 2 and may flow to the compressor 20 along the external air line 21. The motor 11 may be driven to rotate the shaft 10. Accordingly, the compressor 20 and the turbine 40 may rotate together.

The external air may be input to the inlet of the compressor 20 and be adiabatically compressed to become heated compressed air. The compressed air may be output from the outlet of the compressor 20 and may flow to the heat exchanger 30 along the bootstrap line 23.

In the heat exchanger 30, the compressed air may be heat-exchanged with a portion of the external air that has passed through the intake air fan 19 by bypassing the compressor 20 along the introduction line 22 from the air scoops 1 and 2. Accordingly, the external air may obtain the heat from the heated compressed air to become a high-temperature external air, and the compressed air may be cooled. The high-temperature external air may be exhausted out of the aircraft through the second exhaust line 62.

The compressed air passing through the heat exchanger 30 may continue to flow to the turbine 40 along the bootstrap line 23. The compressed air may be input to the inlet of the turbine and be adiabatically expanded to become cooled cooling air. The cooling air may be output from the outlet of the turbine and may flow along the cooling line 41.

As a port at the first cooling line 42 of the fifth valve 55 is closed, the cooling air may not flow to the first cooling line 42.

As a port at the second cooling line 43 of the sixth valve 56 is opened and a port at the cooling heat exchanger 50 is closed, the cooling air may flow to the air-conditioning heat exchanger 44 along the second cooling line.

In the air-conditioning heat exchanger 44, the cooling air may be heat-exchanged with air circulating through the interior 3 and the air circulation line 4. Accordingly, since air in the interior is deprived of the heat by the cooling air to become low-temperature cooling air, it may be supplied to the interior to perform cooling and/or dehumidification in the interior.

The heat-exchanged cooling air may continue to flow to the cooling heat exchanger 50 along the second cooling line 43. Although the cooling air was heat-exchanged with the air in the interior 3, the heat-exchanged cooling air still has a temperature significantly lower than the temperature of the refrigerant passing through the fuel cell power train 5.

In the cooling heat exchanger 50, the cooling air may cool the refrigerant while exchanging the heat with a high-temperature refrigerant flowing along the refrigerant cooling line 72. Accordingly, cooling of the fuel cell power train 5 may be performed simultaneously with cooling or dehumidification in the interior 3. The cooling air may be exhausted out of the aircraft through the seventh exhaust line 67.

In the refrigerant circulation line 7 constituting the heat management system 6 of the fuel cell power train 5, operations of the seventh to tenth valves 57 to 60 may be controlled so that the third bypass line 77 bypassing the refrigerant-air heat exchanger 38, the refrigerant cooling line 72, and the first bypass line 75 bypassing the heating heat exchanger 37 may communicate with each other.

Meanwhile, some of the compressed air compressed by the compressor 20 may flow to the third valve 53 along the heating line 32 branched from the bootstrap line 23.

As a port at the heating heat exchanger 37 of the third valve 53 is closed, the compressed air may no longer flow along the heating line 32. As a port at the air circulation line 4 of the third valve 53 is opened, the compressed air heated with a predetermined pressure may be supplied to the interior 3 through the third heating line 36.

The compressed air supplied to the air circulation line 4 may (e.g., immediately) be heat-exchanged with the cooling air in the air-conditioning heat exchanger 44, as described above. Accordingly, the circulating air and the introduced compressed air in the interior 3 may be deprived of heat by the cooling air and may become low-temperature cooling air.

Accordingly, the appropriate air pressure may be applied to the interior 3 to perform cooling or dehumidification. A port at the fourth exhaust line 64 of the fourth valve 54 may be closed to recirculate air in the interior 3 along the air circulation line 4 and maintain a constant pressure. In order to prevent overpressure, the port at the fourth exhaust line 64 of the fourth valve 54 may be intermittently opened.

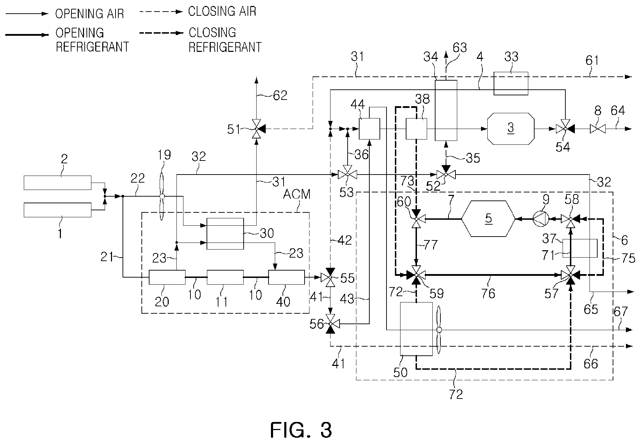

FIG. 3 is a diagram illustrating a case in which an apparatus for controlling temperature and pressure of an aircraft operates in a second mode.

In the second mode, an appropriate air pressure may be applied to the interior 3 to perform dehumidification, and a temperature of the fuel cell power train 5 may be increased. The second mode may be performed in a cold environment (e.g., in winter).

The external air may be compressed to become heated compressed air, and a portion of the compressed air may be supplied to the interior 3 of the aircraft and the heat management system 6 of the fuel cell power train 5 before the heat exchange operation. The remaining compressed air may be heat-exchanged with the external air and may be expanded to form cooling air, and the cooling air may exchange heat with air flowing and circulating in the interior 3 of the aircraft to dehumidify the interior.

For example, a process in which the external air around the aircraft is introduced into the aircraft through the air scoops 1 and 2 and converted into cooling air by passing through the air cycle machine (ACM) and the cooling air flows along the cooling line 41 may be the same as described in FIG. 2.

A process in which some of the external air obtains the heat from the compressed air heated by the heat exchanger 30 to be converted into a high-temperature external air and the high-temperature external air is exhausted out of the aircraft through the second exhaust line 62 may be the same as described in FIG. 2.

As the port at the first cooling line 42 of the fifth valve 55 is closed, the cooling air may not flow to the first cooling line 42 but may flow along the cooling line 41.

As the port at the second cooling line 43 of the sixth valve 56 is opened and the port at the cooling heat exchanger 50 is closed, the cooling air may flow to the air-conditioning heat exchanger 44 along the second cooling line.

In the air-conditioning heat exchanger 44, the cooling air may be heat-exchanged with air circulating through the interior 3 and the air circulation line 4. Accordingly, because air in the interior is deprived of the heat by the cooling air and is converted into to a low-temperature cooling air, the low-temperature cooling air may be supplied to the interior to perform dehumidification in the interior.

The heat-exchanged cooling air may continue to flow to the cooling heat exchanger 50 along the second cooling line 43. The cooling air may be exhausted out of the aircraft through the seventh exhaust line 67.

In the refrigerant circulation line 7 constituting the heat management system 6 of the fuel cell power train 5, operations of the seventh to tenth valves 57 to 60 may be controlled so that the third bypass line 77 bypassing the refrigerant-air heat exchanger 38, the second bypass line 76 bypassing the cooling heat exchanger 50, and the refrigerant heating line 71 may communicate with each other.

Some of the compressed air compressed by the compressor 20 may flow to the heating heat exchanger 37 along the heating line 32 branched from the bootstrap line 23.

In the heating heat exchanger 37, the heated compressed air may be heat-exchanged with the refrigerant passing through the refrigerant heating line 71 of the refrigerant circulation line 7. Accordingly, the compressed air may transmit the heat to the refrigerant to increase an internal temperature of the heat management system 6, and may allow the fuel cell power train 5 to be stably started and operated even in low-temperature environments in winter.

The heat-exchanged compressed air may be exhausted out of the aircraft through the fifth exhaust line 65.

As the port at the air circulation line 4 of the third valve 53 is opened, the compressed air heated with a predetermined pressure may be supplied to the interior 3 by passing through the third heating line 36. As a port at the second heating line 35 of the second valve 52 is closed, the compressed air may flow to the second heating heat exchanger 34.

The compressed air supplied to the air circulation line 4 may (e.g., immediately) be heat-exchanged with the cooling air in the air-conditioning heat exchanger 44, as described above. Accordingly, the circulating air and the introduced compressed air in the interior 3 may be deprived of the heat by the cooling air and may be converted to a low-temperature cooling air.

Accordingly, the appropriate air pressure may be applied to the interior 3 to perform dehumidification. As the port at the fourth exhaust line 64 of the fourth valve 54 is closed, air in the interior may be recirculated along the air circulation line 4 and a constant pressure may be maintained. In order to prevent overpressure, the port at the fourth exhaust line 64 of the fourth valve may be intermittently opened.

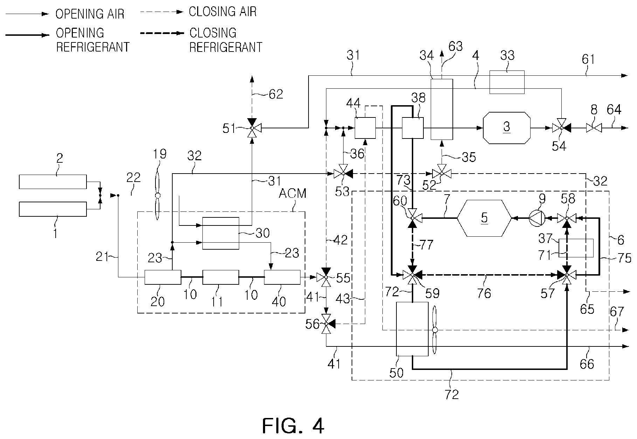

FIG. 4 is a diagram illustrating a case in which an apparatus for controlling temperature and pressure of an aircraft operates in a third mode.

In the third mode, an appropriate air pressure may be applied to the interior 3 and heating may be performed, and the heating element of the fuel cell power train 5, such as the fuel cell stack, may be cooled.

The external air may be compressed to become heated compressed air, and a portion of the compressed air may be supplied to the interior 3 of the aircraft before the heat exchange operation. The remaining compressed air may be heat-exchanged with the external air and may be expanded to form cooling air, and the cooling air may be supplied to the heat management system 6 of the fuel cell power train 5 and may cool the refrigerant by exchanging heat with the refrigerant. The refrigerant heated through the fuel cell power train may heat the interior by exchanging heat with air flowing into the interior.

For example, a process in which the external air around the aircraft is introduced into the aircraft through the air scoops 1 and 2 and converted into cooling air by passing through the air cycle machine (ACM) and the cooling air flows along the cooling line 41 may be the same as described in FIG. 2.

Some of the external air may obtain the heat from the compressed air heated in the heat exchanger 30 to become a high-temperature external air, and a port at the second exhaust line 62 of the first valve 51 may be closed, thus allowing the high-temperature external air to flow to the first heating heat exchanger 33 along the first heating line 31.

In the first heating heat exchanger 33, the heated compressed air may be heat-exchanged with air passing through the air circulation line 4. Accordingly, the air in the interior 3 may obtain the heat from the compressed air and become high-temperature heating air, and the high-temperature heating air may be supplied to the interior to perform heating in the interior.

The heat-exchanged compressed air may be exhausted out of the aircraft through the first exhaust line 61.

As the port at the first cooling line 42 of the fifth valve 55 is closed, the cooling air may not flow to the first cooling line and may flow along the cooling line 41.

Because the port at the second cooling line 43 of the sixth valve 56 is closed and the port at the cooling heat exchanger 50 is opened, the cooling air can flow to the cooling heat exchanger 50 along the cooling line 41.

In the cooling heat exchanger 50, the cooling air may cool the refrigerant while exchanging the heat with the high-temperature refrigerant flowing along the refrigerant cooling line 72. Accordingly, the cooling of the fuel cell power train 5 may be performed. The cooling air may be exhausted out of the aircraft through the sixth exhaust line 66.

In the refrigerant circulation line 7 constituting the heat management system 6 of the fuel cell power train 5, operations of the seventh to tenth valves 57 to 60 may be controlled so that the fourth heating line 73, the refrigerant cooling line 72, and the first bypass line 75 bypassing the heating heat exchanger 37 may communicate with each other.

The refrigerant heated by passing through the fuel cell power train 5 may flow to the refrigerant-air heat exchanger 38 along the fourth heating line 73.

In the refrigerant-air heat exchanger 38, the heated refrigerant may be heat-exchanged with the air passing through the air circulation line 4. Accordingly, the air in the interior 3 may obtain the heat from the refrigerant of the fuel cell power train 5 to become high-temperature heating air, and the high-temperature heating air may be supplied to the interior to perform additional heating in the interior.

Meanwhile, some of the compressed air compressed by the compressor 20 may flow to the third valve 53 along the heating line 32 branched from the bootstrap line 23.

As the port at the heating heat exchanger 37 of the third valve 53 is closed, the compressed air may no longer flow along the heating line 32. As the port at the air circulation line 4 of the third valve 53 is opened, the compressed air heated with a predetermined pressure may be supplied to the interior 3 through the third heating line 36.

The compressed air supplied to the air circulation line 4 may be heat-exchanged with the refrigerant heated in the refrigerant-air heat exchanger 38 as described above. Accordingly, the circulating air and the introduced compressed air in the interior 3 may obtain the heat from the refrigerant and become high-temperature heating air.

Accordingly, the appropriate air pressure may be applied to the interior 3 to perform the heating. As the port at the fourth exhaust line 64 of the fourth valve 54 is closed, air in the interior may be recirculated along the air circulation line 4 and a constant pressure may be maintained. In order to prevent overpressure, the port at the fourth exhaust line 64 of the fourth valve 54 may be intermittently opened.

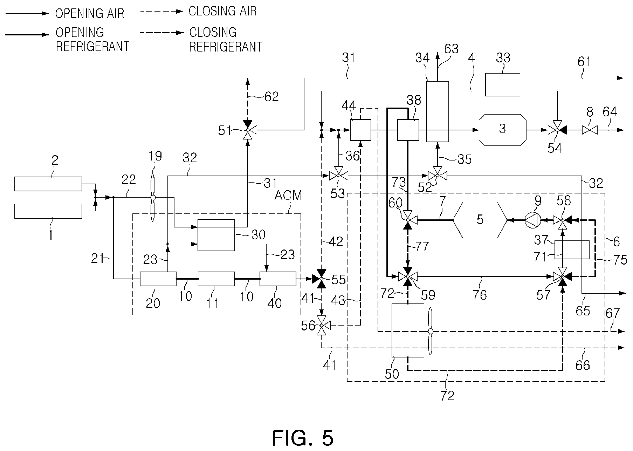

FIG. 5 is a diagram illustrating a case in which an apparatus for controlling temperature and pressure of an aircraft operates in a fourth mode.

In the fourth mode, an appropriate air pressure may be applied to the interior 3 to perform the heating, and the fuel cell power train 5 may be heated. The fourth mode may be performed in winter.

The external air may be compressed to become heated compressed air, and a portion of the compressed air may be supplied to the interior 3 of the aircraft and the heat management system 6 of the fuel cell power train 5 before the heat exchange operation. The remaining compressed air may be heat-exchanged with the external air and may be expanded to form cooling air. The refrigerant heated through the fuel cell power train 5 may heat the interior by exchanging the heat with air flowing into the interior.

For example, a process in which the external air around the aircraft is introduced into the aircraft through the air scoops 1 and 2 and converted into cooling air by passing through the air cycle machine (ACM) may be the same as described in FIG. 2. However, because all ports of the fifth valve 55 are closed, the cooling air may not flow to the cooling line 41 as well as the first cooling line 42.

Some of the external air may obtain the heat from the compressed air heated from the heat exchanger 30 to become a high-temperature external air, and the port at the second exhaust line 62 of the first valve 51 may be closed, thus allowing the high-temperature external air to flow to the first heating heat exchanger 33 along the first heating line 31.

In the first heating heat exchanger 33, the heated compressed air may be heat-exchanged with the air passing through the air circulation line 4. Accordingly, the air in the interior 3 may obtain the heat from the compressed air and become the high-temperature heating air, and the high-temperature heating air may be supplied to the interior to perform heating in the interior.

The heat-exchanged compressed air may be exhausted out of the aircraft through the first exhaust line 61.

In the refrigerant circulation line 7 constituting the heat management system 6 of the fuel cell power train 5, operations of the seventh to tenth valves 57 to 60 may be controlled so that the fourth heating line 73, the second bypass line 76 bypassing the cooling heat exchanger 50, and the refrigerant heating line 71 may communicate with each other.

The refrigerant heated by passing through the fuel cell power train 5 may flow to the refrigerant-air heat exchanger 38 along the fourth heating line 73.

In the refrigerant-air heat exchanger 38, the heated refrigerant may be heat-exchanged with the air passing through the air circulation line 4. Accordingly, the air in the interior 3 may obtain the heat from the refrigerant of the fuel cell power train 5 to become high-temperature heating air, and the high-temperature heating air may be supplied to the interior to perform additional heating in the interior.

Some of the compressed air compressed by the compressor 20 may flow to the heating heat exchanger 37 along the heating line 32 branched from the bootstrap line 23.

In the heating heat exchanger 37, the heated compressed air may be heat-exchanged with the refrigerant passing through the refrigerant heating line 71 of the refrigerant circulation line 7. Accordingly, the compressed air may transmit the heat to the refrigerant to increase the internal temperature of the heat management system 6, and may allow the fuel cell power train 5 to be stably started and operated even in low-temperature environments (e.g., in winter) .

The heat-exchanged compressed air may be exhausted out of the aircraft through the fifth exhaust line 65.

As the port at the air circulation line 4 of the third valve 53 is opened, the compressed air heated with a predetermined pressure may be supplied to the interior 3 through the third heating line 36. As the port at the second heating line 35 of the second valve 52 is opened, the heated compressed air may flow to the second heating heat exchanger 34.

The compressed air supplied to the air circulation line 4 may be heat-exchanged with the refrigerant heated in the refrigerant-air heat exchanger 38, as described above. Accordingly, the circulating air and the introduced compressed air in the interior 3 may obtain the heat from the refrigerant and become high-temperature heating air.

In the second heating heat exchanger 34 disposed between the second heating line 35 and the air circulation line 4 in the interior 3, the heated compressed air may be heat-exchanged with the air passing through the air circulation line 4. Accordingly, the air in the interior 3 may obtain the heat from the compressed air and become the high-temperature heating air, and the high-temperature heating air may be supplied to the interior to perform additional heating in the interior.

Accordingly, the appropriate air pressure may be applied to the interior 3 to perform the heating. As the port at the fourth exhaust line 64 of the fourth valve 54 is closed, air in the interior may be recirculated along the air circulation line 4 and a constant pressure may be maintained. In order to prevent overpressure, the port at the fourth exhaust line 64 of the fourth valve may be intermittently opened.

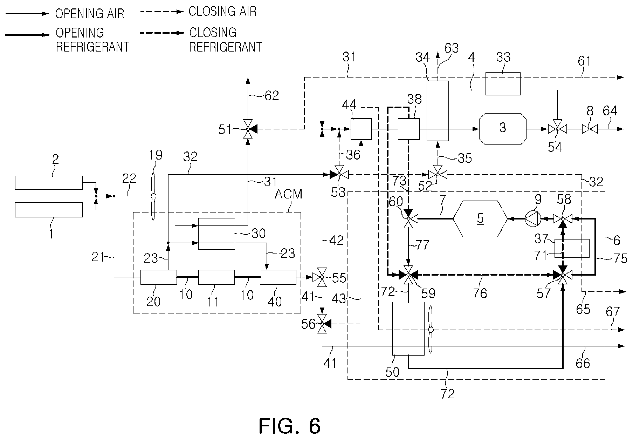

FIG. 6 is a diagram illustrating a case in which an apparatus for controlling temperature and pressure of an aircraft operates in a fifth mode.

In the fifth mode, the cooling or dehumidification may be performed in the interior 3 without pressurization of air pressure, and the heating element of the fuel cell power train 5, such as the fuel cell stack, may be cooled.

The external air may be compressed to become heated compressed air, and the compressed air may be heat-exchanged with the external air and may be expanded to form cooling air, and a portion of the cooling air may be supplied to the interior 3 of the aircraft to cool or dehumidify the interior. The remaining cooling air may be supplied to the heat management system 6 of the fuel cell power train 5 and may cool the refrigerant by exchanging the heat with the refrigerant.

For example, a process in which the external air around the aircraft is introduced into the aircraft through the air scoops 1 and 2 and converted into cooling air by passing through the air cycle machine (ACM) and the cooling air flows along the cooling line 41 may be the same as described in FIG. 2.

A process in which some of the external air obtains the heat from the compressed air heated by the heat exchanger 30 to become a high-temperature external air and the high-temperature external air is exhausted out of the aircraft through the second exhaust line 62 may be the same as described in FIG. 2.

As the port at the first cooling line 42 of the fifth valve 55 is opened, the cooling air may be supplied to the interior 3 through the first cooling line 42. Accordingly, the circulating air in the interior may become a low-temperature cooling air.

Accordingly, cooling or dehumidification in the interior 3 may be performed. Because all ports of the fourth valve 54 are opened, air in the interior may be recirculated or exhausted along the air circulation line 4. In order to maintain the pressure, the pressure control valve 8 may be selectively and at least partially opened and closed if necessary. The air may be exhausted out of the aircraft through the fourth exhaust line 64.

As the port at the second cooling line 43 of the sixth valve 56 is closed and the port at the cooling heat exchanger 50 is opened, the cooling air may flow to the cooling heat exchanger along the cooling line 41.

In the cooling heat exchanger 50, the cooling air may cool the refrigerant while exchanging the heat with the high-temperature refrigerant flowing along the refrigerant cooling line 72. Accordingly, cooling of the fuel cell power train 5 may be performed. The cooling air may be exhausted out of the aircraft through the sixth exhaust line 66.

In the refrigerant circulation line 7 constituting the heat management system 6 of the fuel cell power train 5, operations of the seventh to tenth valves 57 to 60 may be controlled so that the third bypass line 77 bypassing the refrigerant-air heat exchanger 38, the refrigerant cooling line 72, and the first bypass line 75 bypassing the heating heat exchanger 37 may communicate with each other.

Some of the compressed air compressed by the compressor 20 may flow to the third valve 53 along the heating line 32 branched from the bootstrap line 23. In this case, because all ports of the third valve 53 are closed, the compressed air may no longer flow.

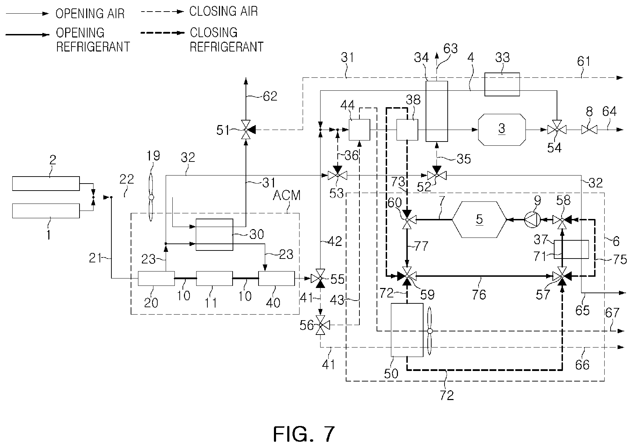

FIG. 7 is a diagram illustrating a case in which an apparatus for controlling temperature and pressure of an aircraft operates in a sixth mode.

In the sixth mode, dehumidification may be performed in the interior 3 without pressurization of air pressure, and the temperature of the fuel cell power train 5 may be increased. The sixth mode may be performed in low-temperature environments (e.g., in winter).

The external air may be compressed to become heated compressed air, and a portion of the compressed air may be supplied to the heat management system 6 of the fuel cell power train 5 before the heat exchange operation. The remaining compressed air may be heat-exchanged with the external air and may be expanded to form cooling air, and the cooling air may be supplied to the interior 3 of the aircraft to dehumidify the interior.

For example, a process in which the external air around the aircraft is introduced into the aircraft through the air scoops 1 and 2 and converted into cooling air by passing through the air cycle machine (ACM) may be the same as described in FIG. 2. However, as a port at the cooling line 41 of the fifth valve 55 is closed, the cooling air may not flow to the cooling line and may flow along the first cooling line 42.

A process in which some of the external air obtains the heat from the compressed air heated by the heat exchanger 30 to become a high-temperature external air and the high-temperature external air is exhausted out of the aircraft through the second exhaust line 62 may be the same as described in FIG. 2.

Because the port at the first cooling line 42 of the fifth valve 55 is opened, the cooling air may be supplied to the interior 3 through the first cooling line. Accordingly, the circulating air in the interior may become a low-temperature cooling air.

Accordingly, dehumidification in the interior may be performed. Because all ports of the fourth valve 54 are opened, air in the interior may be recirculated or exhausted along the air circulation line 4. In order to maintain the pressure, the pressure control valve 8 may be selectively and at least partially opened and closed if necessary. The air may be exhausted out of the aircraft through the fourth exhaust line 64.

Some of the compressed air compressed by the compressor 20 may flow to the heating heat exchanger 37 along the heating line 32 branched from the bootstrap line 23.

In the heating heat exchanger 37, the heated compressed air may be heat-exchanged with the refrigerant passing through the refrigerant heating line 71 of the refrigerant circulation line 7. Accordingly, the compressed air may transmit the heat to the refrigerant to increase the internal temperature of the heat management system 6, and may allow the fuel cell power train 5 to be stably started and operated even in low-temperature environments in winter.

The heat-exchanged compressed air may be exhausted out of the aircraft through the fifth exhaust line 65.

The port at the air circulation line 4 of the third valve 53 of the heating line 32 may be closed, and the port at the second heating line 35 of the second valve 52 may be closed.

In the refrigerant circulation line 7 constituting the heat management system 6 of the fuel cell power train 5, operations of the seventh to tenth valves 57 to 60 may be controlled so that the third bypass line 77 bypassing the refrigerant-air heat exchanger 38, the second bypass line 76 bypassing the cooling heat exchanger 50, and the refrigerant heating line 71 may communicate with each other.

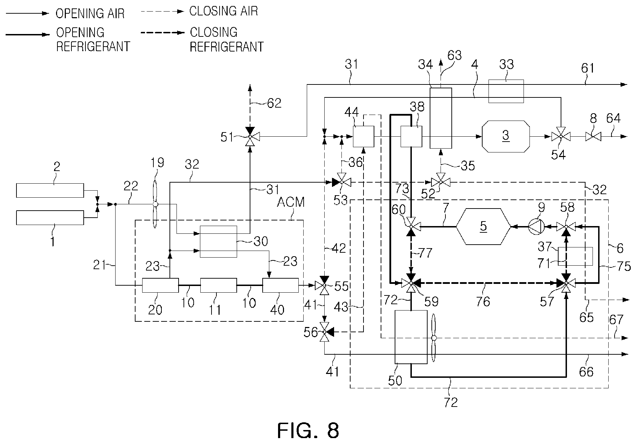

FIG. 8 is a diagram illustrating a case in which an apparatus for controlling temperature and pressure of an aircraft operates in a seventh mode.

In the seventh mode, the heating may be performed in the interior 3 without pressurization of air pressure, and the heating element of the fuel cell power train 5, such as the fuel cell stack, may be cooled.

The external air may be compressed to become heated compressed air, and the compressed air may be heat-exchanged with the external air and may be expanded to form cooling air, and the cooling air may be supplied to the heat management system 6 of the fuel cell power train 5 and may cool the refrigerant by exchange the heat with the refrigerant. The refrigerant heated by passing through the fuel cell power train may heat the interior by exchanging the heat with the air flowing into the interior 3.

For example, a process in which the external air around the aircraft is introduced into the aircraft through the air scoops 1 and 2 and converted into cooling air by passing through the air cycle machine (ACM) and the cooling air flows along the cooling line 41 may be the same as described in FIG. 2.

Some of the external air may obtain the heat from the compressed air heated from the heat exchanger 30 to become a high-temperature external air, and the port at the second exhaust line 62 of the first valve 51 may be closed, thus allowing the high-temperature external air to flow to the first heating heat exchanger 33 along the first heating line 31.

In the first heating heat exchanger 33, the heated compressed air may be heat-exchanged with the air passing through the air circulation line 4. Accordingly, the air in the interior 3 may obtain the heat from the compressed air and become high-temperature heating air, and the high-temperature heating air may be supplied to the interior to perform heating in the interior.

The heat-exchanged compressed air may be exhausted out of the aircraft through the first exhaust line 61.

As the port at the first cooling line 42 of the fifth valve 55 is closed, the cooling air may not flow to the first cooling line and may flow along the cooling line 41.

As the port at the second cooling line 43 of the sixth valve 56 is closed and the port at the cooling heat exchanger 50 is opened, the cooling air may flow to the cooling heat exchanger along the cooling line 41.

In the cooling heat exchanger 50, the cooling air may cool the refrigerant while exchanging the heat with the high-temperature refrigerant flowing along the refrigerant cooling line 72. Accordingly, cooling of the fuel cell power train 5 may be performed. The cooling air may be exhausted out of the aircraft through the sixth exhaust line 66.

In the refrigerant circulation line 7 constituting the heat management system 6 of the fuel cell power train 5, operations of the seventh to tenth valves 57 to 60 may be controlled so that the fourth heating line 73, the refrigerant cooling line 72, and the first bypass line 75 bypassing the heating heat exchanger 37 may communicate with each other.

The refrigerant heated through the fuel cell power train 5 may flow to the refrigerant-air heat exchanger 38 along the fourth heating line 73.

In the refrigerant-air heat exchanger 38, the heated refrigerant may be heat-exchanged with the air passing through the air circulation line 4. Accordingly, the air in the interior 3 may obtain the heat from the refrigerant of the fuel cell power train 5 to become high-temperature heating air, and the high-temperature heating air may be supplied to the interior to perform additional heating in the interior.

Accordingly, heating in the interior 3 may be performed. As all ports of the fourth valve 54 are opened, air in the interior may be recirculated or exhausted along the air circulation line 4. In order to maintain the pressure, the pressure control valve 8 may be selectively and at least partially opened and closed if necessary. The air may be exhausted out of the aircraft through the fourth exhaust line 64.

Some of the compressed air compressed by the compressor 20 may flow to the third valve 53 along the heating line 32 branched from the bootstrap line 23. In this case, as all ports of the third valve 53 are closed, the compressed air may no longer flow.

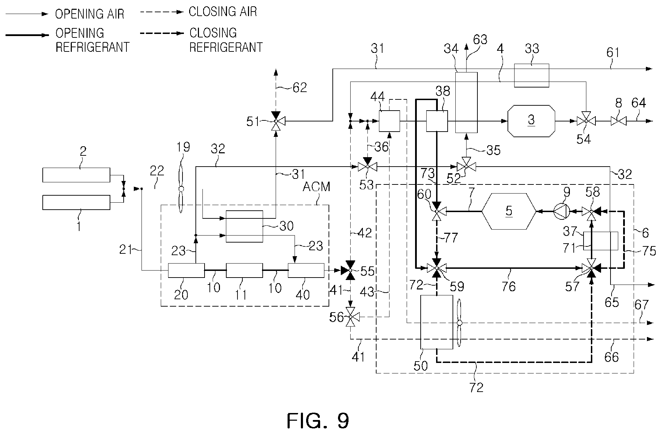

FIG. 9 is a diagram illustrating a case in which an apparatus for controlling temperature and pressure of an aircraft operates in an eighth mode.

In the eighth mode, the heating may be performed in the interior 3 without pressurization of air pressure, and the temperature of the fuel cell power train 5 may be increased. The eighth mode may be performed in low-temperature environments (e.g., in winter).

The external air may be compressed to become heated compressed air, and a portion of the compressed air may be supplied to the heat management system 6 of the fuel cell power train 5 before the heat exchange operation. The remaining compressed air may be heat-exchanged with the external air and may be expanded to form cooling air. The refrigerant heated by passing through the fuel cell power train may heat the interior by exchanging the heat with the air flowing into the interior 3.

For example, a process in which the external air around the aircraft is introduced into the aircraft through the air scoops 1 and 2 and converted into cooling air by passing through the air cycle machine (ACM) may be the same as described in FIG. 2. However, because all ports of the fifth valve 55 are closed, the cooling air may not flow to the cooling line 41 as well as the first cooling line 42.

Some of the external air may obtain the heat from compressed air heated from the heat exchanger 30 to become a high-temperature external air, and the port at the second exhaust line 62 of the first valve 51 may be closed, thus allowing the high-temperature external air to flow to the first heating heat exchanger 33 along the first heating line 31.

In the first heating heat exchanger 33, the heated compressed air may be heat-exchanged with the air passing through the air circulation line 4. Accordingly, the air in the interior 3 may obtain the heat from the compressed air and become the high-temperature heating air, and the high-temperature heating air may be supplied to the interior to perform heating in the interior.

The heat-exchanged compressed air may be exhausted out of the aircraft through the first exhaust line 61.

In the refrigerant circulation line 7 constituting the heat management system 6 of the fuel cell power train 5, operations of the seventh to tenth valves 57 to 60 may be controlled so that the fourth heating line 73, the second bypass line 76 bypassing the cooling heat exchanger 50, and the refrigerant heating line 71 may communicate with each other.

The refrigerant heated through the fuel cell power train 5 may flow to the refrigerant-air heat exchanger 38 along the fourth heating line 73.

In the refrigerant-air heat exchanger 38, the heated refrigerant may be heat-exchanged with the air passing through the air circulation line 4. Accordingly, the air in the interior 3 may obtain the heat from the refrigerant of the fuel cell power train 5 to become high-temperature heating air, and the high-temperature heating air may be supplied to the interior to perform additional heating in the interior.

Accordingly, heating in the interior 3 may be performed. Because all ports of the fourth valve 54 are opened, air in the interior may be recirculated or exhausted along the air circulation line 4. In order to maintain the pressure, the pressure control valve 8 may be selectively and at least partially opened and closed if necessary. The air may be exhausted out of the aircraft through the fourth exhaust line 64.

Some of the compressed air compressed by the compressor 20 may flow to the heating heat exchanger 37 along the heating line 32 branched from the bootstrap line 23.

In the heating heat exchanger 37, the heated compressed air may be heat-exchanged with the refrigerant passing through the refrigerant heating line 71 of the refrigerant circulation line 7. Accordingly, the compressed air may transmit the heat to the refrigerant to increase the internal temperature of the heat management system 6, and may allow the fuel cell power train 5 to be stably started and operated even in low-temperature environments (e.g., in winter) .

The heat-exchanged compressed air may be exhausted out of the aircraft through the fifth exhaust line 65.

The port at the air circulation line 4 of the third valve 53 in the heating line 32 may be closed, and the port at the second heating line 35 of the second valve 52 may be opened.

In the second heating heat exchanger 34 disposed between the second heating line 35 and the air circulation line 4 in the interior 3, the heated compressed air may be heat-exchanged with air passing through the air circulation line. Accordingly, the air in the interior 3 may obtain the heat from the compressed air and become high-temperature heating air, and the high-temperature heating air may be supplied to the interior to perform additional heating in the interior.

According to the apparatus for controlling temperature and pressure, the external air may be appropriately used as a working fluid in, for example, an electric propulsion aircraft without an engine, and accordingly, in addition to control of the air conditioning in the interior, the heated compressed air may be supplied to the fuel cell power train, or a power train and avionics equipment may be cooled.

According to the apparatus for controlling temperature and pressure, the air cycle machine and the heat management system for the fuel cell power train may be continuously operated on the ground, and the power consumption for heating the aircraft may be reduced in lowtemperature environments (e.g., in winter), thereby assisting in an increase of the operating distance of the aircraft.

The aforementioned description merely illustrates the technical concept of the present disclosure, and a person skilled in the art to which the present disclosure pertains may make various modifications.

Therefore, the examples disclosed in this specification and drawings are not intended to limit but to explain the technical concept of the present disclosure.

## Claims

1. An apparatus for an aircraft comprising:
a motor (11);
a shaft (10) coupled to the motor (11) and being rotatable by the motor (11);
a compressor (20) connected to the shaft (10) and being rotatable by the shaft (10), the compressor (20) being configured to form a flow of heated compressed air by compressing a first portion of external air introduced into the aircraft;
a heat exchanger (30) configured to heat-exchange the heated compressed air with a second portion of the external air introduced into the aircraft; and
a turbine (40) connected to the shaft (10) and being rotatable by the shaft (10), the turbine (40) being configured to form a flow of cooling air by expanding the heat-exchanged compressed air;
**characterized in that** the apparatus further comprises:
a fuel cell power train (5) configured to be installed in the aircraft and having a refrigerant configured to cool the fuel cell power train (5); and
a cooling heat exchanger (50) configured to exchange heat between the refrigerant and the cooling air formed by the turbine (40).

2. The apparatus according to claim 1, wherein:
the aircraft comprises a first air scoop (1) through which the external air is introduced and a second air scoop (2) through which the external air is introduced,
the apparatus further comprises an external air line (21) configured to form a flow path from the first air scoop (1) and the second air scoop (2) to the compressor (20), and
the external air of the second air scoop (2) is ram air.

3. The apparatus according to claim 2, further comprising:
an introduction line (22) branched from the external air line (21) and configured to connect the first air scoop (1) and the second air scoop (2) to the heat exchanger (30),
wherein an air intake fan (19) is installed in the introduction line (22).

4. The apparatus according to claim 3, wherein:
an air circulation line (4) for circulating air is configured to be disposed in an interior of the aircraft,
a first heating line (31) is connected to the introduction line (22) downstream of the heat exchanger (30), and
a first heating heat exchanger (33) is disposed between the first heating line (31) and the air circulation line (4), and heat of the external air in the first heating line (31) is transmitted from the first heating heat exchanger (33) to air of the air circulation line (4) to perform heating in the interior.

5. The apparatus according to claim 1, further comprising:
a bootstrap line (23) configured to communicate an outlet of the compressor (20) with an inlet of the turbine (40), and having the heat exchanger (30) disposed therein; and
a fourth heating line (32) branched from the bootstrap line (23) and configured to supply heated compressed air flowing from the outlet of the compressor (20) to at least one of:
an air circulation line (4) for circulating air in an interior of the aircraft, or
a refrigerant circulation line (7) for circulating the refrigerant.

6. The apparatus according to claim 5, wherein:
a second heating line (35) is connected to the fourth heating line (32), and
a second heating heat exchanger (34) is disposed between the second heating line (35) and the air circulation line (4), and heat of the heated compressed air flowing through the fourth heating line (32) is selectively transmitted from the second heating heat exchanger (34) to air of the air circulation line (4) to perform heating in the interior.

7. The apparatus according to claim 5 or 6,
wherein a third heating line (36) is connected between the fourth heating line (32) and the air circulation line (4), and the heated compressed air is selectively and directly supplied, via the third heating line (36), to the air circulation line (4).

8. The apparatus according to claim 7,
wherein when the heated compressed air is supplied to the third heating line (36) and air is circulated without exhaust in the air circulation line (4), the interior is configured to be pressurized.

9. The apparatus according to one of claims 5-8,
wherein a third heating heat exchanger (37) is disposed between the fourth heating line (32) and the refrigerant circulation line (7), and heat of the heated compressed air flowing through the fourth heating line (32) is selectively transmitted from the third heating heat exchanger (37) to the refrigerant to increase a temperature of the fuel cell power train (5).

10. The apparatus according to claim 1, further comprising:
a third cooling line (41) connected to an outlet of the turbine (40), through which cooling air flowing from the outlet of the turbine (40) flows,
wherein the cooling heat exchanger (50) is disposed between the third cooling line (41) and a refrigerant circulation line (7) for circulating the refrigerant, and a heated refrigerant flowing through the refrigerant circulation line (7) is selectively cooled by the cooling air in the cooling heat exchanger (50).

11. The apparatus according to claim 10, wherein:
a first cooling line (42) is connected between an air circulation line (4) and the third cooling line (41),
the air circulation line (4) is configured to circulate air in an interior of the aircraft, and
the cooling air flowing from the outlet of the turbine (40) is selectively and directly supplied to the air circulation line (4) through the first cooling line (42) to perform cooling in the interior.

12. The apparatus according to claim 10, wherein:
a second cooling line (43) is connected to the third cooling line (41),
an air circulation line (4) is configured to circulate air in an interior of the aircraft, and
an air-conditioning heat exchanger (44) is disposed between the air circulation line (4) and the second cooling line (43), and air flowing through the air circulation line (4) is selectively cooled by the cooling air in the air-conditioning heat exchanger (44) to perform cooling in the interior.

13. The apparatus according to claim 12,
wherein the second cooling line (43) is connected to the cooling heat exchanger (50) downstream of the air-conditioning heat exchanger (44), and the cooling air cools the refrigerant in the cooling heat exchanger (50).

14. The apparatus according to claim 10,
wherein the refrigerant circulation line (7) is connected to an air circulation line (4) configured to be in the aircraft through a refrigerant-air heat exchanger (38) upstream of the cooling heat exchanger (50), and heat of the heated refrigerant flowing through the refrigerant circulation line (7) is selectively transmitted from the refrigerant-air heat exchanger (38) to air of the air circulation line (4) to perform heating in an interior of the aircraft.

## Patentansprüche

1. Vorrichtung für ein Flugzeug, welche aufweist:
einen Elektromotor (11);
eine Welle (10), welche mit dem Elektromotor (11) gekuppelt und welche mittels des Elektromotors (11) drehbar ist;
einen Kompressor (20), welcher mit der Welle (10) verbunden ist und welcher mittels der Welle (10) drehbar ist, wobei der Kompressor (20) eingerichtet ist, um einen Strom von erwärmter komprimierter Luft durch Komprimieren eines ersten Teils von in das Flugzeug hinein eingebrachter externer Luft zu bilden;
einen Wärmetauscher (30), welcher eingerichtet ist, um die erwärmte komprimierte Luft mit einem zweiten Teil der in das Flugzeug hinein eingebrachten Luft wärmezutauschen; und
eine Turbine (40), welche mit der Welle (10) verbunden ist und welche mittels der Welle (10) drehbar ist, wobei die Turbine (40) eingerichtet ist, um einen Strom von Kühlluft durch Expandieren der wärmegetauschten komprimierten Luft zu bilden;
**dadurch gekennzeichnet, dass** die Vorrichtung ferner aufweist:
einen Brennstoffzelle-Antriebsstrang (5), welcher eingerichtet ist, um in dem Flugzeug installiert zu sein, und welcher ein Kältemittel hat, welches eingerichtet ist, um den Brennstoffzelle-Antriebsstrang (5) zu kühlen; und
einen Kühlen-Wärmetauscher (50), welcher eingerichtet ist, um Wärme zwischen dem Kältemittel und der mittels der Turbine (40) gebildeten Kühlluft auszutauschen.

2. Vorrichtung gemäß Anspruch 1, wobei:
das Flugzeug eine erste Lufthutze(1), durch welche die externe Luft eingebracht wird, und eine zweite Lufthutze (2), durch welche die externe Luft eingebracht wird, aufweist,
die Vorrichtung ferner eine Externe-Luft-Leitung (21) aufweist, welche eingerichtet ist, um einen Strömungspfad von der ersten Lufthutze (1) und der zweiten Lufthutze (2) zu dem Kompressor (20) zu bilden, und
die externe Luft der zweiten Lufthutze (2) Stauluft ist.

3. Vorrichtung gemäß Anspruch 2, welche ferner aufweist:
eine Einbringungsleitung (22), welche von der Externe-Luft-Leitung (21) abgezweigt ist und welche eingerichtet ist, um die erste Lufthutze (1) und die zweite Lufthutze (2) mit dem Wärmetauscher (30) zu verbinden,
wobei ein Luft-Einlass-Gebläse (19) in der Einbringungsleitung (22) installiert ist.

4. Vorrichtung gemäß Anspruch 3, wobei:
eine Luft-Zirkulationsleitung (4) zum Zirkulieren von Luft eingerichtet ist, um in einem Innenraum des Flugzeugs angeordnet zu sein,
eine erste Heizleitung (31) mit der Einbringungsleitung (22) stromabwärts des Wärmetauschers (30) verbunden ist, und
ein erster Heizen-Wärmetauscher (33) zwischen der ersten Heizleitung (31) und der Luft-Zirkulationsleitung (4) angeordnet ist, und Wärme der externen Luft in der ersten Heizleitung (31) von dem ersten Heizen-Wärmetauscher (33) an Luft der Luft-Zirkulationsleitung (4) übertragen wird, um ein Heizen in dem Innenraum durchzuführen.

5. Vorrichtung gemäß Anspruch 1, welche ferner aufweist:
eine Bootstrap-Leitung (23), welche eingerichtet ist, um einen Auslass des Kompressors (20) mit einem Einlass der Turbine (40) in Verbindung zu bringen, und welche den Wärmetauscher (30) darin angeordnet hat; und
eine vierte Heizleitung (32), welche von der Bootstrap-Leitung (23) abzweigt ist und welche eingerichtet ist, um erwärmte komprimierte Luft zuzuführen, welche aus dem Auslass des Kompressors (20) zu zumindest einer von:
einer Luft-Zirkulationsleitung (4) zum Zirkulieren von Luft in einem Innenraum des Flugzeugs oder
einer Kältemittel-Zirkulationsleitung (7) zum Zirkulieren des Kältemittels strömt.

6. Vorrichtung gemäß Anspruch 5, wobei:
eine zweite Heizleitung (35) mit der vierten Heizleitung (32) verbunden ist, und
ein zweiter Heizen-Wärmetauscher (34) zwischen der zweiten Heizleitung (35) und der Luft-Zirkulationsleitung (4) angeordnet ist, und Wärme der durch die vierte Heizleitung (32) strömenden erwärmten komprimierten Luft selektiv von dem zweiten Heizen-Wärmetauscher (34) an Luft der Luft-Zirkulationsleitung (4) übertragen wird, um ein Heizen in dem Innenraum durchzuführen.

7. Vorrichtung gemäß Anspruch 5 oder 6,
wobei eine dritte Heizleitung (36) zwischen der vierten Heizleitung (32) und der Luft-Zirkulationsleitung (4) angeschlossen ist und die erwärmte komprimierte Luft der Luft-Zirkulationsleitung (4), via die dritte Heizleitung (36), selektiv und direkt zugeführt wird.

8. Vorrichtung gemäß Anspruch 7,
wobei, wenn die erwärmte komprimierte Luft der dritten Heizleitung (36) zugeführt wird und Luft ohne Auslass in der Luft-Zirkulationsleitung (4) zirkuliert wird, der Innenraum eingerichtet ist, um unter Druck gesetzt zu sein.

9. Vorrichtung gemäß einem der Ansprüche 5 bis 8,
wobei ein dritter Heizen-Wärmetauscher (37) zwischen der vierten Heizleitung (32) und der Kältemittel-Zirkulationsleitung (7) angeordnet ist und Wärme der durch die vierte Heizleitung (32) strömenden erwärmten komprimierten Luft selektiv von dem dritten Heizwärmetauscher (37) auf das Kältemittel übertragen wird, um eine Temperatur des Brennstoffzelle-Antriebsstrangs (5) zu erhöhen.

10. Vorrichtung gemäß Anspruch 1, welche ferner aufweist:
eine dritte Kühlleitung (41), welche mit einem Auslass der Turbine (40) verbunden ist und durch welche von dem Auslass der Turbine (40) strömende Kühlluft strömt,
wobei der Kühlen-Wärmetauscher (50) zwischen der dritten Kühlleitung (41) und einer Kältemittel-Zirkulationsleitung (7) zum Zirkulieren des Kältemittels angeordnet ist und ein durch die Kältemittel-Zirkulationsleitung (7) strömendes erwärmtes Kältemittel mittels der Kühlluft in dem Kühlen-Wärmetauscher (50) selektiv gekühlt wird.

11. Vorrichtung gemäß Anspruch 10, wobei:
eine erste Kühlleitung (42) zwischen einer Luft-Zirkulationsleitung (4) und der dritten Kühlleitung (41) angeschlossen ist,
die Luft-Zirkulationsleitung (4) eingerichtet ist, um Luft in einem Innenraum des Flugzeugs zu zirkulieren, und
die von dem Auslass der Turbine (40) strömende Kühlluft der Luft-Zirkulationsleitung (4) durch die erste Kühlleitung (42) selektiv und direkt zugeführt wird, um ein Kühlen in dem Innenraum durchzuführen.

12. Vorrichtung gemäß Anspruch 10, wobei:
eine zweite Kühlleitung (43) mit der dritten Kühlleitung (41) verbunden ist,
eine Luft-Zirkulationsleitung (4) eingerichtet ist, um Luft in einem Innenraum des Flugzeugs zu zirkulieren, und
ein Klimaanlage-Wärmetauscher (44) zwischen der Luft-Zirkulationsleitung (4) und der zweiten Kühlleitung (43) angeordnet ist, und durch die Luft-Zirkulationsleitung (4) strömende Luft mittels der Kühlluft in dem Klimaanlage-Wärmetauscher (44) selektiv gekühlt wird, um ein Kühlen in dem Innenraum durchzuführen.

13. Vorrichtung gemäß Anspruch 12,
wobei die zweite Kühlleitung (43) mit dem Kühlen-Wärmetauscher (50) stromabwärts des Klimaanlage-Wärmetauschers (44) verbunden ist und die Kühlluft das Kältemittel in dem Kühlen-Wärmetauscher (50) kühlt.

14. Vorrichtung gemäß Anspruch 10,
wobei die Kältemittel-Zirkulationsleitung (7) mit einer Luft-Zirkulationsleitung (4), welche eingerichtet ist, um in dem Flugzeug zu sein, durch einen Kältemittel-Luft-Wärmetauscher (38) stromaufwärts des Kühlen-Wärmetauschers (50) verbunden ist, und Wärme des durch die Kältemittel-Zirkulationsleitung (7) strömenden erwärmten Kältemittels von dem Kältemittel-Luft-Wärmetauscher (38) an die Luft der Luft-Zirkulationsleitung (4) selektiv übertragen wird, um ein Heizen in einem Innenraum des Flugzeugs durchzuführen.

## Revendications

1. Appareil pour un aéronef, comprenant :
un moteur (11) ;
un arbre (10) couplé au moteur (11) et pouvant être mis en rotation par le moteur (11) ;
un compresseur (20) relié à l'arbre (10) et pouvant être mis en rotation par l'arbre (10), le compresseur (20) étant configuré pour former un écoulement d'air comprimé chauffé en comprimant une première partie d'air externe introduit dans l'aéronef ;
un échangeur de chaleur (30) configuré pour effectuer un échange de chaleur de l'air comprimé chauffé avec une seconde partie de l'air externe introduit dans l'aéronef ; et
une turbine (40) reliée à l'arbre (10) et pouvant être mise en rotation par l'arbre (10), la turbine (40) étant configurée pour former un écoulement d'air de refroidissement en dilatant l'air comprimé ayant fait l'objet d'un échange de chaleur ;
**caractérisé en ce que** l'appareil comprend en outre :
un groupe motopropulseur à pile à combustible (5) configuré pour être installé dans l'aéronef et ayant un fluide caloporteur configuré pour refroidir le groupe motopropulseur à pile à combustible (5) ; et
un échangeur de chaleur de refroidissement (50) configuré pour échanger de la chaleur entre le fluide caloporteur et l'air de refroidissement formé par la turbine (40).

2. Appareil selon la revendication 1, dans lequel :
l'aéronef comprend une première prise d'air (1) à travers laquelle l'air externe est introduit et une seconde prise d'air (2) à travers laquelle l'air externe est introduit, l'appareil comprend en outre une conduite d'air externe (21) configurée pour former un chemin d'écoulement depuis la première prise d'air (1) et la seconde prise d'air (2) jusqu'au compresseur (20), et
l'air externe du seconde prise d'air (2) est de l'air dynamique.

3. Appareil selon la revendication 2, comprenant en outre :
une conduite d'introduction (22) dérivée de la conduite d'air externe (21) et configurée pour relier la première prise d'air (1) et la seconde prise d'air (2) à l'échangeur de chaleur (30),
dans lequel un ventilateur d'admission d'air (19) est installé dans la conduite d'introduction (22).

4. Appareil selon la revendication 3, dans lequel :
une conduite de circulation d'air (4) pour faire circuler de l'air est configurée pour être disposée dans un intérieur de l'aéronef,
une première conduite de chauffage (31) est reliée à la conduite d'introduction (22) en aval de l'échangeur de chaleur (30), et
un premier échangeur de chaleur de chauffage (33) est disposé entre la première conduite de chauffage (31) et la conduite de circulation d'air (4), et de la chaleur de l'air externe dans la première conduite de chauffage (31) est transmise depuis le premier échangeur de chaleur de chauffage (33) à de l'air de la conduite de circulation d'air (4) pour réaliser un chauffage dans l'intérieur.

5. Appareil selon la revendication 1, comprenant en outre :
une conduite auto-entretenue (23) configurée pour faire communiquer une sortie du compresseur (20) avec une entrée de la turbine (40), et ayant l'échangeur de chaleur (30) disposé dans celle-ci ; et
une quatrième conduite de chauffage (32) dérivée de la conduite auto-entretenue (23) et configurée pour fournir de l'air comprimé chauffé s'écoulant depuis la sortie du compresseur (20) à au moins une parmi :
une conduite de circulation d'air (4) pour faire circuler de l'air dans un intérieur de l'aéronef, ou
une conduite de circulation de fluide caloporteur (7) pour faire circuler le fluide caloporteur.

6. Appareil selon la revendication 5, dans lequel :
une deuxième conduite de chauffage (35) est reliée à la quatrième conduite de chauffage (32), et
un deuxième échangeur de chaleur de chauffage (34) est disposé entre la deuxième conduite de chauffage (35) et la conduite de circulation d'air (4), et de la chaleur de l'air comprimé chauffé s'écoulant à travers la quatrième conduite de chauffage (32) est transmise sélectivement depuis le deuxième échangeur de chaleur de chauffage (34) à de l'air de la conduite de circulation d'air (4) pour réaliser un chauffage dans l'intérieur.

7. Appareil selon la revendication 5 ou 6,
dans lequel une troisième conduite de chauffage (36) est reliée entre la quatrième conduite de chauffage (32) et la conduite de circulation d'air (4), et l'air comprimé chauffé est fourni sélectivement et directement, par l'intermédiaire de la troisième conduite de chauffage (36), à la conduite de circulation d'air (4).

8. Appareil selon la revendication 7,
dans lequel lorsque l'air comprimé chauffé est fourni à la troisième conduite de chauffage (36) et la circulation de l'air est entraînée sans évacuation dans la conduite de circulation d'air (4), l'intérieur est configuré pour être pressurisé.

9. Appareil selon un des revendications 5 à 8,
dans lequel un troisième échangeur de chaleur de chauffage (37) est disposé entre la quatrième conduite de chauffage (32) et la conduite de circulation de fluide caloporteur (7), et de la chaleur de l'air comprimé chauffé s'écoulant à travers la quatrième conduite de chauffage (32) est transmise sélectivement depuis le troisième échangeur de chaleur de chauffage (37) au fluide caloporteur pour augmenter une température du groupe motopropulseur à pile à combustible (5).

10. Appareil selon la revendication 1, comprenant en outre :
une troisième conduite de refroidissement (41) reliée à une sortie de la turbine (40), à travers laquelle s'écoule de l'air de refroidissement s'écoulant depuis la sortie de la turbine (40),
dans lequel l'échangeur de chaleur de refroidissement (50) est disposé entre la troisième conduite de refroidissement (41) et une conduite de circulation de fluide caloporteur (7) pour faire circuler le fluide caloporteur, et un fluide caloporteur chauffé s'écoulant à travers la conduite de circulation de fluide caloporteur (7) est refroidi sélectivement par l'air de refroidissement dans l'échangeur de chaleur de refroidissement (50).

11. Appareil selon la revendication 10, dans lequel :
une première conduite de refroidissement (42) est reliée entre une conduite de circulation d'air (4) et la troisième conduite de refroidissement (41),
la conduite de circulation d'air (4) est configurée pour faire circuler de l'air dans un intérieur de l'aéronef, et
l'air de refroidissement s'écoulant depuis la sortie de la turbine (40) est fourni sélectivement et directement à la conduite de circulation d'air (4) par l'intermédiaire de la première conduite de refroidissement (42) pour réaliser un refroidissement dans l'intérieur.

12. Appareil selon la revendication 10, dans lequel :
une deuxième conduite de refroidissement (43) est reliée à la troisième conduite de refroidissement (41),
une conduite de circulation d'air (4) est configurée pour faire circuler de l'air dans un intérieur de l'aéronef, et
un échangeur de chaleur de conditionnement d'air (44) est disposé entre la conduite de circulation d'air (4) et la deuxième conduite de refroidissement (43), et de l'air s'écoulant à travers la conduite de circulation d'air (4) est refroidi sélectivement par l'air de refroidissement dans l'échangeur de chaleur de conditionnement d'air (44) pour réaliser un refroidissement dans l'intérieur.

13. Appareil selon la revendication 12,
dans lequel la deuxième conduite de refroidissement (43) est reliée à l'échangeur de chaleur de refroidissement (50) en aval de l'échangeur de chaleur de conditionnement d'air (44), et l'air de refroidissement refroidit le fluide caloporteur dans l'échangeur de chaleur de refroidissement (50).

14. Appareil selon la revendication 10,
dans lequel la conduite de circulation de fluide caloporteur (7) est reliée à une conduite de circulation d'air (4) configurée pour être dans l'aéronef à travers un échangeur de chaleur fluide caloporteur-air (38) en amont de l'échangeur de chaleur de refroidissement (50), et de la chaleur du fluide caloporteur chauffé s'écoulant à travers la conduite de circulation de fluide caloporteur (7) est transmise sélectivement depuis l'échangeur de chaleur fluide caloporteur-air (38) à de l'air de la conduite de circulation d'air (4) pour réaliser un chauffage dans un intérieur de l'aéronef.
